# EUROPÄISCHE PATENTSCHRIFT

(11) **EP 2 697 847 B1**
(45) Veröffentlichungstag und Bekanntmachung des Hinweises auf die Patenterteilung: **09.09.2015**
(21) Anmeldenummer: 12711370.2
(22) Anmeldetag: 13.03.2012
(51) Int. Cl.: H01M 2/20, H01M 2/22, H01G 9/008, H01G 11/74, H01G 4/228, H01M 10/0525, H02J 7/34

(54) **SPEICHEREINHEIT MIT EINEM FEDERND KONTAKTIERTEN ENERGIESPEICHER**
STORAGE UNIT HAVING AN ENERGY STORAGE MEANS WITH WHICH CONTACT IS MADE IN A RESILIENT MANNER
UNITÉ D'ACCUMULATION COMPORTANT UN ACCUMULATEUR D'ÉNERGIE MIS EN CONTACT DE FAÇON ÉLASTIQUE

(30) Priorität: 13.04.2011 DE 102011007312
(43) Veröffentlichungstag der Anmeldung: 19.02.2014
(73) Patentinhaber: Robert Bosch GmbH, 70442 Stuttgart (DE)
(72) Erfinder: DILLMANN, Adolf, 72525 Muensingen (DE); HOLP, Reiner, 72474 Winterlingen (DE); HUEHNER, Stefan, 72127 Kusterdingen (DE)
(86) Internationale Anmeldenummer: PCT/EP2012/054350
(87) Internationale Veröffentlichungsnummer: WO 2012/139843

(56) Entgegenhaltungen:
- EP-A1- 2 230 705
- EP-A2- 2 219 269
- WO-A2-2011/038854
- CH-A5- 675 935
- DE-A1-102007 017 018
- DE-A1-102008 050 437
- US-A- 3 795 844
- US-A1- 2003 193 317

## Beschreibung

### Stand der Technik

Die Erfindung betrifft eine Speichereinheit zum Speichern elektrischer Energie. Die Speichereinheit weist wenigstens einen Energiespeicher auf, wobei der Energiespeicher wenigstens einen positiven Anschluss und wenigstens einen negativen Anschluss aufweist. Der Energiespeicher ist ausgebildet, über den positiven Anschluss und den negativen Anschluss mit elektrischer Energie aufgeladen zu werden und die elektrische Energie über die Anschlüsse wieder abzugeben.

Bei aus dem Stand der Technik bekannten Energiespeichern besteht das Problem, dass bei einem Serien- oder Parallelverbund von Energiespeichern in einer Speichereinheit thermische Ausdehnungen der Energiespeicher zu einem Verbiegen der elektrischen Anschlüsse führen kann, welchen dann in Folge von Materialermüdung in Folge des Bewegtwerdens brechen können.

Aus der DE 10 2007 017 018 A1 ist eine Batterie mit mehreren Zellen bekannt. Zum Überbrücken einer Zelle im Fälle eines sich in der Zelle aufbauenden Überdrucks ist eine Zellüberbrückungseinrichtung mit einer Strohmschiene vorgesehen, die bewegliche schaltbare elektrische Kontaktelemente umfasst, die von einem ersten in einen zweiten Schaltzustand geschaltet werden können. Dazu ist einen Schnappkontakt nach Art eines Schalters vorgesehen, welcher als gesondertes, von der Stromschiene getrenntes Bauteil gefertigt ist.

### Offenbarung der Erfindung

Die Erfindung ist durch die Speichereinheit gemäß Anspruch 1 definiert.

Erfindungsgemäß ist bei der Speichereinheit der eingangs genannten Art der positive und negative Anschluss jeweils durch eine elektrisch leitfähige Schicht, insbesondere eine Schoopschicht gebildet. Die Speichereinheit weist eine mit dem positiven Anschluss verbundene elektrisch leitfähige Kontaktschiene und eine mit dem negativen Anschluss verbundene elektrisch leitfähige Kontaktschiene auf. Die Kontaktschienen weisen jeweils wenigstens ein Kontaktelement auf, wobei das Kontaktelement ausgebildet ist, die elektrisch leitfähige Schicht federnd elektrisch - insbesondere galvanisch - zu kontaktieren. Bevorzugt sind die Kontaktschienen jeweils mit einem äußeren Anschluss zum elektrischen Verbinden der Speichereinheit verbunden. Mittels der so gebildeten Anordnung können die mittels der elektrisch leitfähigen Schicht gebildeten elektrischen Anschlüsse der Energiespeicher vorteilhaft galvanisch kontaktiert werden, wobei die Kontaktelemente bei einem Bewegen der Schicht der Energiespeicher relativ zur Kontaktschiene und so zu dem mit der Kontaktschiene verbundenen Kontaktelement von dem Kontaktelement schleifend kontaktiert werden. Vorteilhaft kann so eine thermisch verursachte Längenausdehnung der Energiespeicher nicht zu einem Brechen einer Schweißverbindung oder einer Lötverbindung zwischen der Kontaktschiene und der elektrisch leitfähigen Schicht, welche den negativen bzw. den positiven Anschluss des Energiespeichers bildet, führen.

Eine Kontaktschiene versteht sich als elektrisch leitfähiges Verbindungsmittel, mit welchem das wenigstens eine Kontaktelement verbunden oder an dieses angeformt ist und die den äußeren Anschluss der Speichereinheit mit der elektrisch leitfähigen Schicht, insbesondere einer Schoopschicht des Energiespeichers verbindet.

Erfindungsgemäß ist die Kontaktschiene der Speichereinheit wenigstens teilweise durch einen insbesondere abgewinkelten Abschnitt eines Bleches gebildet. Die Kontaktelemente sind bevorzugt durch Stanzen einer Aussparung aus dem Blech gebildet, sodass die Aussparung das Kontaktelement umgibt. Die Aussparung ist beispielsweise U-förmig ausgebildet.

Bevorzugt bilden die Kontaktschienen jeweils oder gemeinsam eine Rinne, in der der wenigstens eine Energiespeicher wenigstens teilweise aufgenommen ist. Dadurch kann vorteilhaft eine großflächige Stromleitung der aus dem Energiespeicher abgeführten oder beim Aufladen des Energiespeichers hineingeführten elektrischen Energie über die blechförmigen Kontaktschienen erfolgen. Weiter vorteilhaft wird so eine geringe Stromdichte und somit auch eine geringe Verlustwärme in den Kontaktschienen erreicht. Mittels der Kontaktschienen kann so auch wenigstens ein Teil eines Gehäuses gebildet sein, das den Energiespeicher wenigstens teilweise oder vollständig aufnimmt. Die Kontaktschienen können von einer Mold-Masse eingebettet sein, so dass wenigstens ein Teil des Gehäuses durch ein äußeres Kunststoffgehäuse gebildet ist, welches beispielsweise ein Polyurethan oder ein Epoxidharz umfasst.

Erfindungsgemäß ist das wenigstens eine Kontaktelement an die Kontaktschiene angeformt. Das Kontaktelement kann beispielsweise durch Stanzen der bereits erwähnten Aussparung aus der Kontaktschiene, insbesondere dem Blechabschnitt der Kontaktschiene gebildet sein. Das Kontaktelement ist so an die Kontaktschiene angeformt. In einer anderen, nicht erfindungsgemäßen Ausführungsform ist das Kontaktelement mit der Kontaktschiene durch Schweißen, insbesondere Punktschweißen verbunden. Das Kontaktelement kann so aus einem anderen Material gebildet sein als die Kontaktschiene. Beispielsweise ist das Material der Kontaktschiene Eisen oder Kupfer. Das Material des Kontaktelements ist beispielsweise vergoldetes Kupfer oder eine Legierung umfassend Kupfer und Zink.

Erfindungsgemäß ist das Kontaktelement mittels eines Federelements mit der Kontaktschiene federnd verbunden. Beispielsweise kann die Kontaktschiene eine Feder, insbesondere eine Schraubenfeder aufweisen, welche auf das Kontaktelement federnd aufdrückt und dieses mit einem zum elektrischen Kontaktieren der Schicht vorgesehenen Flächenbereich gegen die Schicht drückt.

In einer bevorzugten Ausführungsform weist der Energiespeicher wenigstens einen Akkumulator und/oder wenigstens einen Kondensator auf. Der Kondensator ist beispielsweise ein Wickelkondensator. Der Akkumulator ist beispielsweise ein Lithiumionen-Akkumulator, insbesondere Lithium-Polymerakkumulator. Im Falle eines Wickelkondensators kann mittels der federnd ausgebildeten Kontaktelemente vorteilhaft ein Schleifkontakt gebildet sein, welcher die elektrisch leitfähige Schicht des Wickelkondensators, insbesondere eine Schoopschicht, beim Bewegen des Kondensators, verursacht durch thermische Ausdehnung des Kondensators, schleifend kontaktieren kann. Die Schoopschicht ist beispielsweise eine Kupfer-Zink-Schicht oder eine Aluminiumschicht.

Im Falle eines Akkumulators kann in gleicher Weise vorteilhaft ein Berührungs- und/oder Schleifkontakt gebildet sein, der die elektrisch leitfähige Schicht, insbesondere eine Kupferschicht oder eine Schicht umfassend eine Kupfer-haltige Legierung mit wenigstens einem anderen Metall, beispielsweise Zink, galvanisch kontaktiert. Dadurch kann im Falle thermischen Ausdehnung des Akkumulators, also einer Relativbewegung der Schicht zu dem Kontaktelement eine elektrische Kontaktierung der Schicht schleifend erfolgen.

Erfindungsgemäß ist das Kontaktelement ein Schnappelement. Das Schnappelement ist ausgebildet, zwischen einem zum Berühren der elektrisch leitfähigen Schicht des Kondensators vorgesehenen Berührungsort und einem von dem Berührungsort beabstandeten Ort bewegt zu werden. Das Kontaktelement ist bevorzugt ausgebildet, die Schicht an dem Berührungsort insbesondere federnd zu kontaktieren.

Durch das Schnappelement kann vorteilhaft eine Ausführungsform der Speichereinheit gebildet sein, bei der das Schnappelement in einem von dem Berührungsort beabstandeten Ort gehalten ist, woraufhin der Energiespeicher in die Nähe der Kontaktschiene gebracht wird, beispielsweise in eine mittels der Kontaktschienen gebildeten Rinne eingeführt wird. Nach dem Einführen der Energiespeicher in die Rinne kann das Kontaktelement in Form des Schnappelements zum Berührungsort hinbewegt werden, wo es die elektrisch leitfähige Schicht des Energiespeichers, insbesondere des Kondensators elektrisch kontaktiert. Vorteilhaft kann durch die so gebildete Ausführungsform des Kontaktelements das Kontaktelement während eines Einführens in die Rinne nicht verbogen oder beschädigt werden.

In einer vorteilhaften Ausführungsform ist das Kontaktelement ausgebildet, mit einem zum Berühren der Schicht ausgebildeten Abschnitt des Kontaktelements wenigstens teilweise in die Schicht einzudringen und die Schicht so elektrisch zu kontaktieren. Beispielsweise kann der zum Berühren der Schicht ausgebildete Abschnitt ein Schneidmesser oder eine Nadel sein, welcher ausgebildet ist, die elektrisch leitfähige Schicht einschneidend oder eindrückend zu kontaktieren. So kann vorteilhaft eine Oxidschicht, welche sich auf der elektrisch leitfähigen Schicht des Energiespeichers befindet, beim federnden Kontaktieren angekratzt und durchdrungen werden. Weiter vorteilhaft kann bei einem durch thermische Ausdehnung verursachten Bewegen des Energiespeichers relativ zu dem Kontaktelement die Oxidschicht, welche sich beispielsweise aufgrund von thermischem Erwärmen und wieder Abkühlen im Laufe einer Betriebszeit der Speichereinheit durch Alterung gebildet hat, bei jedem thermischen Bewegen von neuem durchschabt werden, sodass ein sicherer elektrischer Kontakt zwischen dem Kontaktelement und der elektrisch leitfähigen Schicht des Energiespeichers hergestellt ist.

Bei einem Verfahren zum elektrischen Kontaktieren wenigstens eines Energiespeichers eines Speicherelements, wobei der Energiespeicher wenigstens teilweise in einem Gehäuse aufgenommen ist, wird eine elektrisch leitfähige Schicht des Energiespeichers mittels wenigstens eines federnd ausgebildeten Kontaktes galvanisch insbesondere schleifend kontaktiert, so dass der Energiespeicher sich beispielsweise bei thermischen Ausdehnungen in dem Gehäuse - insbesondere beim Erwärmtwerden und Wiederabkühlen - hin- und herbewegen kann. So können thermische Ausdehnungen des Kondensators nicht zu einem Bruch eines elektrischen Anschlusses führen.

Bevorzugt wird der wenigstens eine Kontakt von einem vom Berührungsort beabstandeten Ort zu dem Berührungsort - insbesondere zu dem Berührungsort hinschnappend - bewegt, nachdem der Energiespeicher in das Gehäuse eingefügt wurde. Weiter bevorzugt wird der Energiespeicher am Berührungsort durch den - insbesondere hingeschnappten - Kontakt mechanisch federnd elektrisch kontaktiert.

Die Speichereinheit ist beispielsweise ein Zwischenkreiskondensator eines elektrischen Antriebs, eines Generators eines Range-Extenders, insbesondere mit einem Elektrofahrzeug mitführbar ausgebildetes Notstromaggregat für ein Elektrofahrzeug. Der elektrische Antrieb ist beispielsweise ein elektrischer Antrieb eines Elektrofahrzeugs, eines Turboladers oder eines Hybridfahrzeugs, unfassend einen Elektromotor und einen Verbrennungsmotor.

In einer anderen Ausführungsform ist die Speichereinheit ein Zwischenkreiskondensator eines Solarinverters.

Die Erfindung wird nun im Folgenden anhand von Figuren und weiteren Ausführungsbeispielen beschrieben. Weitere vorteilhafte Ausführungsvarianten ergeben sich aus den Merkmalen der abhängigen Ansprüche sowie aus den Merkmalen der Figuren.
Figur 1 zeigt schematisch ein nicht erfindungsgemäßes Ausführungsbeispiel für eine Speichereinheit, bei der federnd ausgebildete Kontaktelemente einer elektrischen Kontaktschiene eine Schoopschicht eines Wickelkondensators elektrisch kontaktieren;
Figur 2 zeigt schematisch die in Figur 1 bereits dargestellten Kontaktelemente, welche jeweils durch Stanzen einer Aussparung aus der Kontaktschiene 12 erzeigt worden sind;
Figur 3 zeigt schematisch ein erfindungsgemäßes Ausführungsbeispiel für ein federnd ausgebildetes kontaktelement, welches als Schnappelement ausgebildet ist;
Figur 4 zeigt schematisch ein Ausführungsbeispiel für ein Verfahren zum elektrischen Kontaktieren eines Wickelkondensators in einer Speichereinheit.

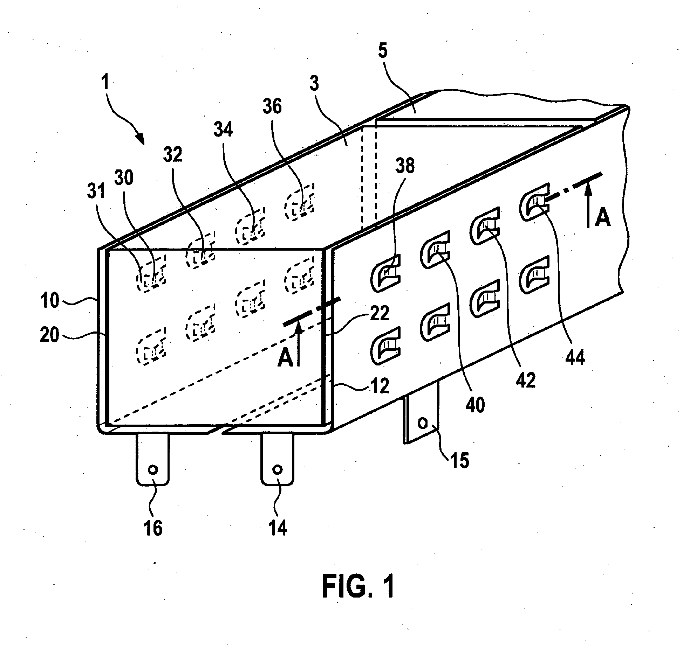

Figur 1 zeigt ein Ausführungsbeispiel für eine Speichereinheit 1. Die Speichereinheit 1 weist wenigstens einen elektrischen Energiespeicher, in diesem

Ausführungsbeispiel einen elektrischen Energiespeicher 3 und einen elektrischen Energiespeicher 5 auf. Die elektrischen Energiespeicher 3 und 5 weisen jeweils einen positiven und einen negativen Anschluss auf, wobei die Energiespeicher 3 und 5 über die positiven und negativen Anschlüsse jeweils elektrisch aufgeladen und wieder entladen werden können. Der Energiespeicher 3 weist als positiven elektrischen Anschluss eine elektrisch leitfähige Schicht 20 auf, welche beispielsweise als Schoopschicht ausgebildet ist. Der Energiespeicher 3 weist auch als negativen elektrischen Anschluss eine elektrisch leitfähige Schicht 22 auf, welche beispielsweise als Schoopschicht ausgebildet ist.

Die Speichereinheit 1 weist eine elektrisch leitfähige Kontaktschiene 10 auf, welche in diesem Ausführungsbeispiel als abgewinkeltes Blech ausgebildet ist. Die Kontaktschiene 10 weist einen elektrischen äußeren Anschluss 16 zum elektrischen Verbinden der Speichereinheit 1 auf. Der Anschluss 16 ist an die Kontaktschiene 10 angeformt und in diesem Ausführungsbeispiel als abgewinkelter Blechstreifen gebildet.

Die Speichereinheit 1 weist auch eine elektrisch leitfähige Kontaktschiene 12 auf, welche als abgewinkeltes Blech, insbesondere Kupferblech, ausgebildet ist. Die elektrisch leitfähige Kontaktschiene 12 weist wie die elektrisch leitfähige Kontaktschiene 10 einen äußeren Anschluss 14 auf, welcher an die Kontaktschiene 12 angeformt ist.

Die Kontaktschiene 10 weist eine Mehrzahl von elektrisch leitfähigen Kontaktelementen auf, welche an die Kontaktschiene angeformt sind. In diesem Ausführungsbeispiel weist die Kontaktschiene 10 mehrere durch Stanzen einer U-förmigen Aussparung gebildete Kontaktelemente auf. Die Kontaktelemente 30, 32, 34 und 36 sind beispielhaft bezeichnet. Das Kontaktelement 30 ist durch Stanzen der U-förmigen Aussparung 31 erzeugt.

Die Kontaktschiene 12 weist - wie die Kontaktschiene 10 - mehrere Kontaktelemente auf, welche an die Kontaktschiene 12 angeformt sind. Die Kontaktelemente 38, 40, 42 und 44 sind beispielhaft bezeichnet.

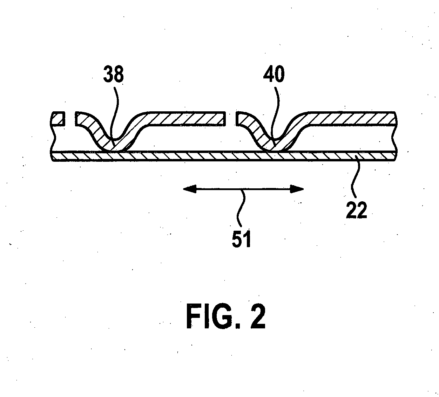

Dargestellt ist auch eine Schnittlinie eines Schnittes A-A, welche entlang einer Längserstreckung der Kontaktschiene 12 durch die Kontaktelemente 38, 40, 42 und 44 verläuft. Der Schnitt A-A ist im Folgenden in Figur 2 teilweise dargestellt.

Dargestellt ist auch ein äußerer elektrischer Anschluss 15, welcher mit der Kontaktschiene 12 mittels Schweißens, insbesondere Punktschweißens verbunden ist. Die Kontaktschiene 12 kann so unabhängig oder zusätzlich zu dem Anschluss 14 nach außen hin elektrisch verbunden werden.

Figur 2 zeigt die in Figur 1 bereits dargestellten Kontaktelemente 38 und 40, welche jeweils durch Stanzen einer Aussparung aus der Kontaktschiene 12 erzeugt worden sind. Die Kontaktelemente 38 und 40 sind jeweils durch Blechabschnitte gebildet, welche jeweils an das durch die Kontaktschiene 12 gebildete Blech angeformt sind. Die Kontaktelemente 38 und 40 weisen jeweils im Bereich eines Endes eine Wölbung auf, welche sich zu der elektrisch leitfähigen Schicht 22 konvex hin erstreckt. Die Wölbungen der Kontaktelemente 38 und 40 berühren dabei mit einem Oberflächenbereich der Wölbung die Schicht 22. Wenn die Schicht 22 - verursacht durch thermische Ausdehnung des Energiespeichers - entlang einer Längserstreckung 51 des Energiespeichers bewegt wird, so bilden die Kontaktelemente 38 und 40 jeweils Schleifkontakte, deren zuvor erwähnter Oberflächenbereich der Wölbung mit der elektrisch leitfähigen Schicht 22 in elektrischer Wirkverbindung gehalten wird.

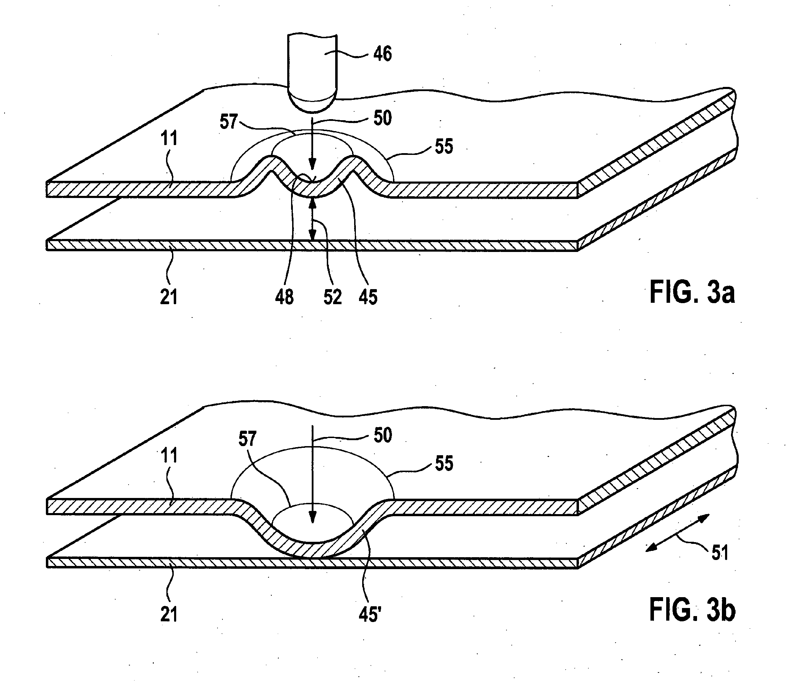

Die Figuren 3a und 3b zeigen ein Ausführungsbeispiel für ein Kontaktelement, welches als Schnappelement ausgebildet ist.

In Figur 3a ist eine Kontaktschiene 11 abschnittsweise dargestellt. Die Kontaktschiene 11 ist durch ein Blech gebildet, wobei in dem Blech das Kontaktelement 45 durch Prägen von zwei Rinnen 55 und 57 in die Kontaktschiene 11 erzeugt ist. Der Ring 57 weist einen kleineren Durchmesser auf als der Ring 55, wobei der Ring 57 innerhalb des Ringes 55 auf einer Oberfläche der Kontaktschiene 11 angeordnet ist.

Der in dem Ring 55 angeordnete Ring 57 wölbt sich aus einer Ebene der Kontaktschiene 11 heraus und bildet dabei einen Rand, von dem aus sich das Kontaktelement 45 - ähnlich einem Krater eines Vulkans - hohl zu einem Zentrum des Ringes 57 erstreckt.

Auf einer zu der hohlen Seite des Kontaktelements 45 gegenüberliegenden Seite des Bleches der Kontaktschiene 11 ist eine konvexe Wölbung gebildet, welche durch einen Abstand 52 von einer Oberfläche der elektrisch leitfähigen Schicht 21 beabstandet ist. Zum Kontaktieren der elektrisch leitfähigen Schicht 21 mittels des Kontaktelements 45 kann beispielsweise mittels eines entsprechend der konkaven Wölbung des Kontaktelements 45 geformten Stiftes 46 durch Bewegen entlang einer Richtung 50 des Stiftes 46 in die konkave Wölbung des Kontaktelements 45 und Drücken auf eine Oberfläche 48 der konkaven Wölbung, das Kontaktelement 45 schnappend mit der elektrisch leitfähigen Schicht 21 in elektrischen Wirkkontakt gebracht werden. Das ist in Figur 3b dargestellt, welche das elektrisch leitfähige Kontaktelement 45 der Figur 3a in einem zum elektrischen Kontaktieren geschnappten Zustand 45' zeigt. Wenn die elektrisch leitfähige Schicht 21 beispielsweise durch thermische Ausdehnung entlang einer Längserstreckung 51 bewegt wird, so kann das elektrisch leitfähige Kontaktelement 45 in der Position 45' die Schicht 21 schleifend und federnd kontaktieren.

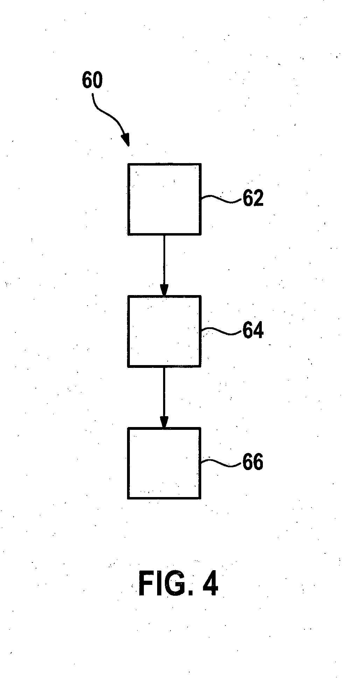

Figur 4 zeigt ein Verfahren zum elektrischen Kontaktieren einer Schoopschicht eines Wickelkondensators als Bestandteil einer Speichereinheit.

In einem Schritt 62 wird ein Kontaktelement, beispielsweise durch Stanzen aus einem Blech oder durch Prägen eines Bereiches des Blechs, in einer Kontaktschiene gebildet.

In einem Schritt 64 wird ein Energiespeicher, welcher die elektrisch leitfähige Schoopschicht als elektrischen Anschluss aufweist, in die Nähe des Kontaktelements gebracht.

In einem Schritt 66 wird das Kontaktelement schnappend auf die Schoopschicht bewegt, sodass das Kontaktelement mit einem zum elektrischen Verbinden mit der Schoopschicht ausgebildeten Oberflächenbereich die Schoopschicht federnd berührt und so elektrisch kontaktiert.

## Patentansprüche

1. Speichereinheit (1) zum Speichern elektrischer Energie, mit wenigstens einem Energiespeicher (3, 5), welcher wenigstens einen positiven Anschluss (20) und wenigstens einen negativen Anschluss (22) aufweist, wobei der Energiespeicher (3, 5) ausgebildet ist, über den positiven Anschluss (20) und den negativen Anschluss (20) mit elektrischer Energie aufgeladen zu werden und die elektrische Energie über die Anschlüsse (20, 22) wieder abzugeben, wobei der positive und negative Anschluss (20, 22) jeweils durch eine elektrisch leitfähige Schicht, gebildet ist, und die Speichereinheit (1) eine mit dem positiven Anschluss (10) verbundene elektrisch leitfähige Kontaktschiene (10) und eine mit dem negativen Anschluss (22) verbundene elektrisch leitfähige Kontaktschiene (12) aufweist, wobei die Kontaktschienen (10, 11, 12) jeweils wenigstens ein Kontaktelement (30, 32, 34, 36, 45) aufweisen, wobei die Kontaktelemente (30, 32, 34, 36, 45) ausgebildet sind, die elektrisch leitfähige Schicht (20, 22) federnd elektrisch zu kontaktieren, wobei die Kontaktschienen (10, 12) jeweils mit einem äußeren Anschluss (14, 15, 16) zum elektrischen Verbinden der Speichereinheit (1) verbunden sind, wobei
das Kontaktelement (45) ein Schnappelement (45) ist, welches ausgebildet ist, zwischen einem zum Berühren der Schicht (20, 22) vorgesehenen Berührungsort und einem von dem Berührungsort beabstandeten Ort bewegt zu werden, wobei das Kontaktelement (45) ausgebildet ist, den Anschluss (20, 22) an dem Berührungsort federnd elektrisch zu kontaktieren,
**dadurch gekennzeichnet, dass**
die Kontaktschiene (10, 11, 12) durch ein Blech gebildet ist, wobei in dem Blech das Kontaktelement (45) durch Prägen von zwei Ringen (55, 57) in die Kontaktschiene (10, 11, 12) erzeugt ist, und wobei ein kleinerer der zwei Ringe (57) einen kleineren Durchmesser aufweist als der größere Ring (55) der zwei Ringe (55, 57) und wobei der kleinere Ring (57) innerhalb des größeren Ringes (55) auf einer Oberfläche der Kontaktschiene (10, 11,12) angeordnet ist, und wobei der in dem größeren Ring (55) angeordnete kleinere Ring (57) sich aus einer Ebene der Kontaktschiene (10, 11, 12) herauswölbt und dabei einen Rand bildet, von dem aus sich das Kontaktelement (45) hohl zu einem Zentrum des Ringes (57) erstreckt, wobei auf einer zu der hohlen Seite des Kontaktelements (45) gegenüberliegenden Seite des Bleches der Kontaktschiene (11) eine konvexe Wölbung gebildet ist, welche durch einen Abstand (52) von einer Oberfläche der elektrisch leitfähigen Schicht (21) beabstandet ist,
wobei das Kontaktelement (45) zum Kontaktieren der elektrisch leitfähigen Schicht (21) mittels des Kontaktelements (45) mittels Drücken auf eine Oberfläche (48) der konkaven Wölbung, schnappend mit der elektrisch leitfähigen Schicht (20, 21) in elektrischen Wirkkontakt gebracht werden kann.

2. Speichereinheit (1) nach Anspruch 1,
**dadurch gekennzeichnet, dass**
die elektrisch leitfähige Schicht eine Schoopschicht ist.

3. Speichereinheit (1) nach Anspruch 1 oder 2,
**dadurch gekennzeichnet, dass**
die Kontaktschienen (10, 12) jeweils oder gemeinsam eine Rinne bilden, in der der Energiespeicher (3, 5) wenigstens teilweise aufgenommen ist.

4. Speichereinheit (1) nach einem der vorhergehenden Ansprüche,
**dadurch gekennzeichnet, dass**
der Energiespeicher (3, 5) wenigstens einen Akkumulator und/oder wenigstens einen Kondensator, insbesondere Wickelkondensator aufweist.

5. Speichereinheit (1) nach einem der vorhergehenden Ansprüche,
**dadurch gekennzeichnet, dass**
das Kontaktelement ((30, 32, 34, 36, 45) ausgebildet ist, mit einem zum Berühren der Schicht (20, 22) ausgebildeten Abschnitt wenigstens teilweise in die Schicht (20, 22) einzudringen und die Schicht (20, 22) so elektrisch zu kontaktieren.

## Claims

1. Storage unit (1) for storing electrical energy, having at least one energy store (3, 5) which has at least one positive connection (20) and at least one negative connection (22), wherein the energy store (3, 5) is designed to be charged with electrical energy via the positive connection (20) and the negative connection (20) and to output the electrical energy again via the connections (20, 22), wherein the positive and the negative connection (20, 22) are each formed by an electrically conductive layer, and the storage unit (1) has an electrically conductive contact rail (10) which is connected to the positive connection (20), and has an electrically conductive contact rail (12) which is connected to the negative connection (22), wherein the contact rails (10, 11, 12) each have at least one contact element (30, 32, 34, 36, 45), wherein the contact elements (30, 32, 34, 36, 45) are designed to make electrical contact with the electrically conductive layer (20, 22) in a resilient manner, wherein the contact rails (10, 12) are each connected to an outer connection (14, 15, 16) for electrical connection of the storage unit (1), wherein the contact element (45) is a snap-action element (45) which is designed to be moved between a contact point which is provided for making contact with the layer (20, 22) and a point which is at a distance from the contact point, wherein the contact element (45) is designed to make electrical contact with the connection (20, 22) at the contact point in a resilient manner, **characterized in that**
the contact rail (10, 11, 12) is formed by a metal sheet, wherein the contact element (45) is produced in the metal sheet by impressing two rings (55, 57) into the contact rail (10, 11, 12), and wherein a smaller of the two rings (57) has a smaller diameter than the larger ring (55) of the two rings (55, 57), and wherein the smaller ring (57) is arranged within the larger ring (55) on a surface of the contact rail (10, 11, 12), and wherein the smaller ring (57), which is arranged in the larger ring (55), bulges out of a plane of the contact rail (10, 11, 12) and, in the process, forms an edge from which the contact element (45) extends as a hollow element to a centre of the ring (57), wherein a convex curved portion is formed on a side of the metal sheet of the contact rail (11) which is opposite to the hollow side of the contact element (45), the said convex curved portion being at a distance (52) from a surface of the electrically conductive layer (21),
wherein the contact element (45) for making contact with the electrically conductive layer (21) can be brought into operative electrical contact with the electrically conductive layer (20, 21) with a snap action by means of the contact element (45) by means of pressing a surface (48) of the concave curved portion.

2. Storage unit (1) according to Claim 1,
**characterized in that**
the electrically conductive layer is a sprayed-metal layer.

3. Storage unit (1) according to Claim 1 or 2,
**characterized in that**
the contact rails (10, 12) each or together form a channel in which the energy store (3, 5) is at least partially accommodated.

4. Storage unit (1) according to one of the preceding claims,
**characterized in that**
the energy store (3, 5) has at least one rechargeable battery and/or at least one capacitor, in particular winding capacitor.

5. Storage unit (1) according to one of the preceding claims,
**characterized in that**
the contact element (30, 32, 34, 36, 45) is designed to at least partially enter the layer (20, 22) by way of a section which is designed to make contact with the layer (20, 22), and to make electrical contact with the layer (20, 22) in this way.

## Revendications

1. Unité d'accumulation (1) destinée à accumuler de l'énergie électrique, comprenant au moins un accumulateur d'énergie (3, 5), lequel comprend au moins une borne positive (20) et au moins une borne négative (22), l'accumulateur d'énergie (3, 5) étant conçu pour être chargé en énergie électrique par le biais de la borne positive (20) et de la borne négative (20) et pour restituer l'énergie électrique par le biais des bornes (20, 22), les bornes positive et négative (20, 22) étant formées respectivement par une couche électriquement conductrice, et l'unité d'accumulation (1) comprenant un rail de contact (10) électriquement conducteur connecté à la borne positive (20) et un rail de contact (12) électriquement conducteur connecté à la borne négative (22), les rails de contact (10, 11, 12) comprenant respectivement au moins un élément de contact (30, 32, 34, 36, 45), les éléments de contact (30, 32, 34, 36, 45) étant conçus pour mettre la couche électriquement conductrice (20, 22) en contact électrique de façon élastique, les rails de contact (10, 12) étant connectés respectivement à une borne extérieure (14, 15, 16) en vue de la connexion électrique de l'unité d'accumulation (1), l'élément de contact (45) étant un élément d'encliquetage (45) qui est conçu pour être déplacé entre un emplacement de contact prévu pour le contact avec la couche (20, 22) et un emplacement espacé de l'emplacement de contact, l'élément de contact (45) étant conçu pour mettre la borne (20, 22) en contact électrique de façon élastique à l'emplacement de contact,
**caractérisée en ce que**
le rail de contact (10, 11, 12) est formé par une tôle, l'élément de contact (45) étant produit dans la tôle par estampage de deux anneaux (55, 57) dans le rail de contact (10, 11, 12), et un plus petit anneau (57) parmi les deux anneaux présentant un diamètre inférieur au plus grand anneau (55) parmi les deux anneaux (55, 57), et le plus petit anneau (57) étant disposé à l'intérieur du plus grand anneau (55) sur une surface du rail de contact (10, 11, 12), et le plus petit anneau (57) disposé dans le plus grand anneau (55) étant bombé hors d'un plan du rail de contact (10, 11, 12) et formant en l'occurrence un bord à partir duquel l'élément de contact (45) s'étend de manière creuse jusqu'à un centre de l'anneau (57), un bombement convexe étant formé sur un côté, opposé au côté creux de l'élément de contact (45), de la tôle du rail de contact (11), lequel bombement est espacé d'une surface de la couche électriquement conductrice (21) d'une distance (52),
l'élément de contact (45) pouvant être amené en contact électrique actif avec la couche électriquement conductrice (20, 21) par encliquetage, en vue de la mise en contact de la couche électriquement conductrice (21) au moyen de l'élément de contact (45) au moyen d'une pression sur une surface (48) du bombement concave.

2. Unité d'accumulation (1) selon la revendication 1,
**caractérisée en ce que**
la couche électriquement conductrice est une couche de schoopage.

3. Unité d'accumulation (1) selon la revendication 1 ou 2,
**caractérisée en ce que**
les rails de contact (10, 12) forment à chaque fois ou en commun un conduit dans lequel l'accumulateur d'énergie (3, 5) est reçu au moins partiellement.

4. Unité d'accumulation (1) selon l'une quelconque des revendications précédentes,
**caractérisée en ce que**
l'accumulateur d'énergie (3, 5) comprend au moins un accumulateur et/ou au moins un condensateur, en particulier un condensateur bobiné.

5. Unité d'accumulation (1) selon l'une quelconque des revendications précédentes,
**caractérisée en ce que**
l'élément de contact (30, 32, 34, 36, 45) est conçu pour pénétrer au moins partiellement dans la couche (20, 22) par une partie conçue pour le contact avec la couche (20, 22), et pour ainsi mettre la couche (20, 22) en contact électrique.
